(19) Europäisches Patentamt
European Patent Office
Office européen des brevets

(11) **EP 2 957 857 A2**

(12) **DEMANDE DE BREVET EUROPEEN**

(43) Date de publication:
**23.12.2015 Bulletin 2015/52**

(51) Int Cl.:
***G01B 11/06*** (2006.01)     ***G01B 21/08*** (2006.01)

(21) Numéro de dépôt: **15172151.1**

(22) Date de dépôt: **15.06.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **19.06.2014 FR 1455650**

(71) Demandeur: **Ponçot, Jan-Claude**
**25000 Besancon (FR)**

(72) Inventeur: **PONÇOT, Jean-Claude**
**25000 BESANÇON (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(54) **DISPOSITIF DE MESURE D'UN ENSEMBLE DE DONNEES SPATIALES D'EPAISSEUR D(X,Y) D'UNE COUCHE MINCE ET PROCEDE DE MESURE UTILISANT LEDIT DISPOSITIF**

(57) L'invention a pour objet un dispositif de mesure d'un ensemble de données spatiales d'épaisseur d(x,y) d'une couche mince comprise dans un ensemble de couche(s) mince(s)/substrat caractérisé en ce qu'il comporte :
- un premier support supportant ledit ensemble de couche(s) mince(s)/substrat et étant couplé à des premiers moyens de mesure d'une première température correspondant à la température To dudit ensemble ;
- un second support entourant des moyens de détection matricielle infra-rouge et étant couplé à des seconds moyens de mesure d'une seconde température correspondant à la température Ta dudit second support ;
- l'un des premier ou second supports comprenant des moyens de chauffage d'un des deux supports, de manière à générer au niveau de ladite couche mince, un ensemble de rayonnements infra-rouge émis ou réfléchi d'énergie W(x,y), ledit ensemble de rayonnements étant :
o confiné dans un volume défini entre les deuxdits supports ;
o détecté par lesdits moyens de détection et relatif à un couple de données spatiales, lesdits moyens fournissant des paramètres liés auxdites épaisseurs ;
o dépendant de la puissance rayonnée (Lo) au niveau dudit premier support et de la puissance rayonnée (La) au niveau dudit second support ;

- des moyens pour réguler la différence de température entre lesdits premier et second supports ;
- des moyens de traitement pour extraire les données spatiales d (x,y) d'épaisseur d(x,y), depuis lesdits paramètres.

FIG.1

## Description

Le domaine de l'invention est celui des systèmes d'instrumentation pour la cartographie d'épaisseurs de couches minces.

Il peut notamment concerner plus particulièrement le domaine la métrologie des couches minces utilisées entre autres dans les technologies modernes de la microélectronique, ou bien encore d'autres secteurs industriels tels que ceux des revêtements sur les métaux (peintures, vernis, anodisation,...), les traitements métallurgiques de tout type notamment pour l'aéronautique, l'automobile, le médical, le spatial, les displays, le photovoltaïque.

Le Demandeur a déjà déposé une demande de brevet publiée sous le numéro 2 993 972 utilisant les principes de base reposant sur l'exploitation des lois d'émission dans l'infra-rouge lointain selon la loi de Planck et proposant un procédé simple de mise en oeuvre et exploitant l'émissivité d'une couche mince dont on veut analyser spatialement l'épaisseur, cette émissivité étant révélée par l'émission infra-rouge dans une élévation de température de ladite couche mince.

Le Demandeur a cherché à perfectionner le procédé proposé dans la demande de brevet 2 993 972, en partant du constat que la précision des mesures devait avantageusement prendre en compte le bilan complet radiométrique d'énergie émise et réfléchie :

- au niveau de ladite couche mince dans des données spatiales à analyser et ;
- au niveau de l'environnement extérieur et des moyens de détection mis en oeuvre ;

en assurant un contrôle des paramètres influençant ce bilan, de manière à en réduire des variations autres que celles dues à des variations d'épaisseur, source de perturbation dans les mesures effectuées.

L'immunité de la mesure vis-à-vis de la variabilité de l'environnement est obtenue grâce à un arrangement spatial spécifique des composants optomécanique du système.

Cette architecture système permet l'amélioration de la métrologie des mesures en résolution, précision et répétabilité. Une autre conséquence est l'amélioration du caractère non destructif de la mesure avec une option de mesure sans apport thermique sur la couche.

Le dispositif de la présente invention comporte notamment des moyens pour réaliser le bilan radiométrique d'énergie $W(x,y)$ émise dépendante des coordonnées $(x,y)$ d'une couche fine appartenant à un ensemble de couche(s)/substrat, c'est-à-dire à un ensemble comportant au moins une couche à la surface d'un substrat, l'ensemble étant positionné au niveau d'un premier support, dont la température de l'ensemble est contrôlé. Le premier support est placé en regard d'un second support comprenant des moyens de détection matricielle de rayonnements infra-rouges, lesdits moyens étant également calibrés en température, le bilan radiométrique étant ainsi déterminé dans un espace confiné entre le premier support et le second support dont les températures sont précisément calibrées et contrôlées.

Plus précisément la présente invention a pour objet un dispositif de mesure d'un ensemble de données spatiales d'épaisseur $d(x,y)$ d'une couche mince comprise dans un ensemble de couche(s) mince(s)/substrat caractérisé en ce qu'il comporte :

- un premier support supportant ledit ensemble de couche(s) mince(s)/substrat et étant couplé à des premiers moyens de mesure d'une première température correspondant à la température To dudit ensemble ;
- un second support entourant des moyens de détection matricielle infra-rouge et étant couplé à des seconds moyens de mesure d'une seconde température correspondant à la température Ta dudit second support ;
- l'un des premier ou second supports comprenant des moyens de chauffage d'un des deux supports, de manière à générer au niveau de ladite couche mince, un ensemble de rayonnements infra-rouge émis ou réfléchi d'énergie $W(x,y)$, ledit ensemble de rayonnements étant :

    o confiné dans un volume défini entre les deuxdits supports ;
    o détecté par lesdits moyens de détection et relatif à un couple de données spatiales, lesdits moyens fournissant des paramètres liés auxdites épaisseurs ;
    o dépendant de la puissance rayonnée au niveau dudit ensemble sur le premier support et de la puissance rayonnée au niveau dudit second support ;

- des moyens pour réguler les températures dudit ensemble et dudit second support et en conséquence réguler la différence des températures;
- des moyens de traitement pour extraire les données spatiales d'épaisseur $d(x,y)$, depuis lesdits paramètres.

Ainsi selon la présente invention, les températures de référence pour la mesure sont la température To de l'ensemble et la température Ta du second support. La température de l'ensemble To peut être imposée par les moyens de contrôle thermique inclus sur le premier support.

La température réelle de la couche fine d'intérêt est proche de la température dudit premier support (cas d'un contrôle thermique par diffusion de la chaleur, par exemple avec une plaque chauffante, mais ce peut être d'autres moyens (chauffage par induction par exemple). La température réelle de ce premier support n'a en fait pas d'influence sur la mesure car l'immunité de la mesure contre l'environnement extérieure revendiquée par l'architecture proposée dans l'invention s'étend aussi audit support. Merci de confirmer ce paragraphe.

Selon une variante de l'invention, lesdits moyens de traitement comprennent des moyens pour construire une fonction mathématique reliant une épaisseur d (x,y) de la dite couche à une température équivalente t(x,y) obtenue en sortie des moyens de détection.

Selon une variante de l'invention, le dispositif comprend un filtre polychromatique ou un ensemble de plusieurs filtres monochromatiques placé (s) entre le premier support et le second support et des moyens de traitement de transformation de Fourrier inverse adaptés

Selon une variante de l'invention, le support ne comportant pas de moyens de chauffage, comprend des moyens de refroidissement.

Selon une variante de l'invention, ledit dispositif fonctionne en mode émission, la première température To étant supérieure à la seconde température Ta.

Selon une variante de l'invention, ledit dispositif fonctionne en mode réflexion, la première température To étant inférieure à la seconde température Ta.

Selon une variante de l'invention, ledit dispositif comporte une enceinte dans laquelle sont positionnés lesdits premier et second supports.

Selon une variante de l'invention, le second support est une plaque métallique présentant une ouverture centrale dédiée aux moyens de détection.

Selon une variante de l'invention, ladite plaque est recouverte d'un film de matériau d'émissivité proche de 1. Un matériau bien connu de l'état de l'art des techniques utilisées pour la réalisation des « corps noirs » est celui utilisé dans certaines peintures spécialisées.

Selon une variante de l'invention, ledit dispositif comporte des premiers moyens d'asservissement de ladite première température et des seconds moyens d'asservissement de ladite seconde température respectivement sur une première température de consigne $To_c$ et sur une seconde température de consigne $Ta_c$.

Selon une variante de l'invention, les moyens de chauffage de l'un ou de l'autre desdits supports comprennent des moyens pour chauffer par effet Joule ledit support, ledit support pouvant être une plaque métallique.

Selon une variante de l'invention, le dispositif fonctionnant en mode réflexion, le second support comporte une source de rayonnement haute température de type corps noir. Il est possible d'utiliser une source de corps noir à rayonnement étendu commercialisée ou alors réaliser une source de rayonnement spécifiquement adaptée au système à partir de composants de rayonnement plus ponctuels et d'un collimateur optique. A titre d'exemple on peut citer les composants de source infrarouge de la société Boston Electronics Corporation 91 Boylston Street Brookline, MA 02445 USA.

La température de rayonnement peut être choisie entre 1000 K et 3000 K, elle peut être ajustable par une simple commande électrique de courant. Des modes de fonctionnement pulsés peuvent permettre un rayonnement avec apport thermique négligeable. Ces modes de fonctionnement sont d'intérêt pour l'optimisation du fonctionnement système en mode de réflexion à haute température et leurs commandes sont intégrables dans le bloc électronique du système.

Selon une variante de l'invention, les moyens de refroidissement de l'un ou de l'autre desdits supports comprennent des cellules à effet Peltier.

Selon une variante de l'invention, ledit dispositif comporte en outre des moyens pour régler la distance entre les deuxdits supports.

Selon une variante de l'invention, le second support équipé des moyens de détection matricielle est solidaire d'un rail de guidage, pour régler la distance entre les deuxdits supports.

Selon une variante de l'invention, les moyens de détection comprennent un capteur CCD ou CMOS, sensibles dans le domaine infra-rouge.

Selon une variante de l'invention, ledit dispositif comporte en outre un bloc logiciel de commande permettant de commander la régulation des températures, la lecture des moyens de détection, la focalisation des moyens optiques et le facteur de grandissement de l'image.

L'invention a aussi pour objet un procédé de mesure d'un ensemble de données spatiales d'épaisseur d(x,y) d'une couche mince comprise dans un ensemble de couche(s) mince(s)/substrat comprenant les étapes suivantes :

- le positionnement sur un premier support dudit ensemble de couche(s) mince(s)/substrat, couplé à des premiers moyens de mesure de la première température To dudit ensemble ;
- le positionnement au niveau d'un second support, de moyens de détection matricielle infra-rouge, couplé à des seconds moyens de mesure de la seconde température (Ta) dudit second support ;
- le chauffage de l'un des deuxdits supports de manière à générer au niveau de ladite couche mince, un ensemble de rayonnements infra-rouge rayonnés d'énergie W(x,y) ;
- la mesure pour au moins trois épaisseurs connues du couple de (matériau(x) couche(s) mince(s) ; substrat) correspondant à trois calibres, de l'énergie rayonnée (dm, W) ;
- la détermination d'une courbe théorique :

$$d\,[t(x,y)] = (-1/\alpha\text{fit}).\,\text{Ln}\,[1 - (t(x,y) - t_{min}) / (t_{max}-t_{min})]$$ à partir d'une modèle mathématique et desdits trois mesures des trois calibres avec :

- ◦ $t(x,y)$ : un paramètre de température équivalente reliée à l'énergie W(x,y) ;
- ◦ $t_{min}$ et $t_{max}$ : des températures reliées à ladite première température To et à ladite seconde température Ta ;

les paramètres $\alpha$fit, $t_{min}$ et $t_{max}$ constituant un triplet de paramètres spécifiques à la nature des matériaux de l'ensemble et selon le couple de températures To et Ta fixées.

- les mesures d'un ensemble de températures $t_m(x,y)$ au niveau de ladite couche mince ;
- le report desdites mesures $t_m(x,y)$ et données dm dans ladite équation de manière à définir ledit ensemble de données spatiales d'épaisseur d(x,y).

Selon une variante de l'invention, le modèle mathématique est de type régression non-linéaire ou linéaire.

Selon une variante de l'invention, le procédé comporte au moins deux opérations successives de portée en températures à deux températures différentes dudit premier substrat, permettant de supprimer des informations parasites au niveau du détecteur matriciel.

Selon une variante de l'invention, les moyens de détection matricielle comportant une caméra, le procédé comprend une étape de déclenchement de l'acquisition de trames vidéo asservie sur la détection de températures seuil au niveau des capteurs de températures des premiers et seconds supports.

Ainsi selon le procédé de la présente invention, l'émission de l'ensemble couche(s)/substrat dépend de l'épaisseur d(x,y) de la couche mince selon un modèle mathématique de l'émissivité effective d'une couche mince décrite.

Ce modèle est utilisé pour l'extraction de la répartition spatiale d'épaisseur d(x,y) à partir de la mesure de W(x,y) par des moyens de détection matricielle pouvant être de type un imageur infra-rouge large bande optique dans la fenêtre 8-12 $\mu$m, selon une procédure judicieuse de calibration préalable permettant de s'affranchir de la connaissance des propriétés infra-rouges du couple couche mince/substrat, analysé.

L'invention sera mieux comprise et d'autres avantages apparaîtront à la lecture de la description qui va suivre donnée à titre non limitatif et grâce aux figures annexées parmi lesquelles :

- la figure 1 schématise l'architecture système de la présente invention ;
- la figure 2 illustre la variation du bilan énergétique W en fonction de l'épaisseur de la couche mince analysée en tout point d(x,y) dans le cas où le premier support est porté à une température supérieure à celle à laquelle est le second support (cas A) et dans le cas où le premier support est porté à une température inférieure à celle à laquelle est le second support (cas B) ;
- les figures 3a et 3b illustrent trois cas typiques de réponse t[d(x,y)] en comparaison avec les meilleurs ajustements mathématiques selon un modèle $t_{fit}$ (d) utilisé dans la présente invention pour To < Ta et pour To > Ta ;
- la figure 4 illustre une loi de transformation de l'épaisseur d(t) définie à partir du modèle préalablement établi conduisant à la détermination du paramètre t(x,y) en fonction du bilan énergétique W (x,y), les points (d1,t1), d2,t2) et (d3,t3) illustrent les trois mesures de trois échantillons d'épaisseur pré calibrée pour la calibration de la mesure (fit mathématique sur la loi théorique)
- la figure 5 illustre le synoptique général du dispositif de la présente invention en fonctionnement ;
- la figure 6 illustre un premier exemple de dispositif de l'invention, fonctionnant en mode émission, le premier support comportant des moyens de chauffage pour générer un rayonnement émissif ;
- la figure 7 illustre une variante du premier exemple dans lequel les deux supports sont positionnés dans une enceinte ;
- la figure 8 illustre un second exemple de dispositif de l'invention, fonctionnant en mode réflexion, le second support comportant des moyens de chauffage pour générer un rayonnement émissif susceptible de se réfléchir sur l'ensemble à analyser.

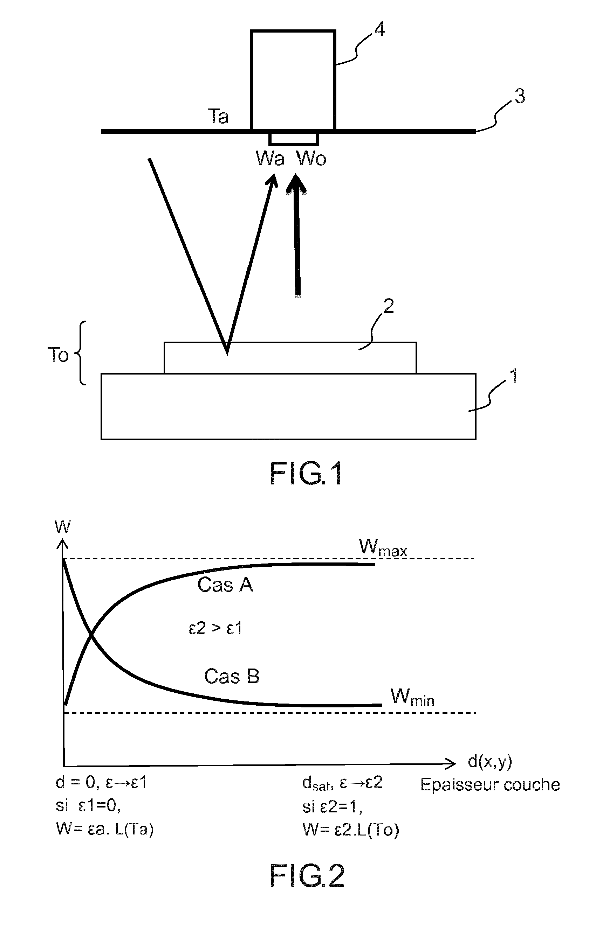

Selon la présente invention, l'architecture système et par exemple illustrée en figure 1, permet le confinement du bilan énergétique dans un volume délimité entre deux plans en vis-à-vis : respectivement celui de l'ensemble 2 : couche(s) mince(s)/substrat lui-même supporté par un premier support 1 et celui d'un second support 3 pouvant typiquement être une plaque dite supérieure disposée tout autour de des moyens de détection matricielle 4 de type par exemple imageur infra-rouge.

La plaque supérieure métallique peut avantageusement être recouverte d'un film épais d'émissivité proche de l'unité. Ces conditions limitent le bilan radiométrique W aux seuls flux d'émission directe Wo de l'ensemble vers l'imageur et du flux Wa d'émission de la plaque supérieure et réfléchi par l'ensemble couche(s) mince(s)/substrat. La surface de l'ensemble est à une température To, la plaque supérieure étant à une température Ta. L'un des deux supports est chauffé, l'autre support pouvant être refroidi par exemple par Effet Peltier.

Ces conditions immunisent la mesure vis-à-vis des parasites extérieurs et augmentent ainsi sa précision et sa répétabilité. Des capteurs des températures To et Ta sont incorporés au système. Des systèmes de contrôle actif de ces deux températures sont commandés via deux boucles d'asservissement entre les capteurs de l'ensemble et de la plaque supérieure et deux consignes To et Ta respectivement.

Deux options de fonctionnement sont possibles selon que l'ensemble est chauffé à une température To supérieure ou inférieure à celle de la plaque Ta. Les réponses énergétiques W (d) de ces deux modes sont complètement symétriques vis-à-vis des équations du bilan radiométrique comme le montre la figure 2 qui illustre le comportement phénoménologique de la variation du bilan énergétique en fonction de l'épaisseur de la couche en tout point (x,y).

Le bilan énergétique W (x,y) reçu en chaque point du détecteur matriciel correspond au bilan spatial d'émission-réflexion.

W (x,y) = Wo (x,y) + Wa (x,y) en chaque point de l'ensemble dans le facteur de réduction d'un sous-système d'imagerie optique incorporé dans les moyens de détection matricielle, par exemple de type caméra.

Ce bilan énergétique répond aux lois conventionnelles de radiométrie infra- rouge faisant appel aux notions d'émissivité des corps gris.

Le substrat a une émissivité $\varepsilon_1$ et le matériau de la couche mince une émissivité $\varepsilon_2$. L'émission de la couche en chaque point (x,y) varie avec l'épaisseur de la couche d(x,y) en chacun de ces points selon la loi W[d(x,y)] suivante :

$$W[d(x,y)] = \varepsilon[d(x,y)].L(To) + \varepsilon a. \ L(Ta).[1-\varepsilon[d(x,y)]] \quad [1]$$

$\varepsilon[d(x,y)]$ est l'émissivité effective de la couche mince en tout point (x,y). Cette loi est issue du modèle physique décrit dans la demande de brevet 1257234, en particulier avec son intégration dans une large bande optique.

De manière générale, $L(T,\lambda)$ est la puissance rayonnée régie par la loi de Planck : elle dépend de la température absolue (To ou Ta) et de la bande de longueur d'onde détectée $\lambda$, ainsi que des conditions fixées de surface et d'angle solide d'émission et de réception sur chaque pixel du détecteur matriciel ou imageur.

Deux cas se présentent selon que la température To de l'ensemble est supérieure (cas A) ou inférieure (cas B) à la température Ta de la plaque supérieure qui sert au confinement énergétique. Les deux réponses W(d) sont symétriques l'une de l'autre. L'utilisation du cas B augmente notablement les performances et élargit le domaine d'exploitation du système de mesure, comme il sera développé ultérieurement.

Pour tout point (x,y) de l'ensemble couche(s) mince(s)/ substrat dénommé, la puissance détectée est comprise entre les valeurs $W_{min}$ et $W_{max}$ :

$$W_{min} = \varepsilon_1. \ L(To) + \varepsilon a. \ L(Ta). \ [1-\varepsilon_1]$$

$$W_{max} = \varepsilon_2.L(To) + \varepsilon a. \ L(Ta). \ [1-\varepsilon_2]$$

La dynamique de variation est exprimée par l'équation suivante :

$$W_{max} - W_{min} = (\varepsilon_2-\varepsilon_1). \ [L(To) - \ \varepsilon a. \ L(Ta)]$$

La réponse est d'autant plus sensible que la pente de variation est grande, donc que d'une part l'écart des émissivités entre couche et substrat est élevé et que d'autre part l'écart de température entre la température To du premier support et la température Ta du second support, est grand.

Concernant les moyens de détection matricielle, les données fournies par la plupart des imageurs destinés à la thermographie infra-rouge sont des données homogènes à une température, la conversion énergie température absolue étant le résultat d'une calibration interne propre à la finalité de ces instruments.

L'émissivité peut être réglée à une valeur prédéterminée. Ces données peuvent être utilisées en valeur relatives t(x,y) dans un traitement de conversion mathématique matriciel pour remonter à l'information d'épaisseur d(x,y) de la couche mince qui est le paramètre recherché dans la présente invention.

Les équations du modèle destiné au traitement des données de l'imageur t(x,y) sont issues de l'équation [1], de l'expression de la loi de Planck L(T) pour To et Ta, de l'expression du modèle théorique d'émissivité proposé dans le brevet 1257234 ; le tout intégré dans les conditions de la bande optique du système optique et de l'imageur matriciel.

La réponse en tout point (x,y), de la température t[d(x,y)] peut être approchée en approximant $L(T,\lambda)$ par la loi de Stefan dans la bande 8 -12 $\mu$m des imageurs de la thermographie, car cette bande couvre la majeure partie de l'émission dans les températures proches de l'ambiante. Partant de la donnée d'énergie W, il est possible de déterminer la donnée de température équivalente t sortant de l'imageur par la loi réciproque de Stefan :

$$t = (1/\sigma. \, W^{-4}) - 273$$

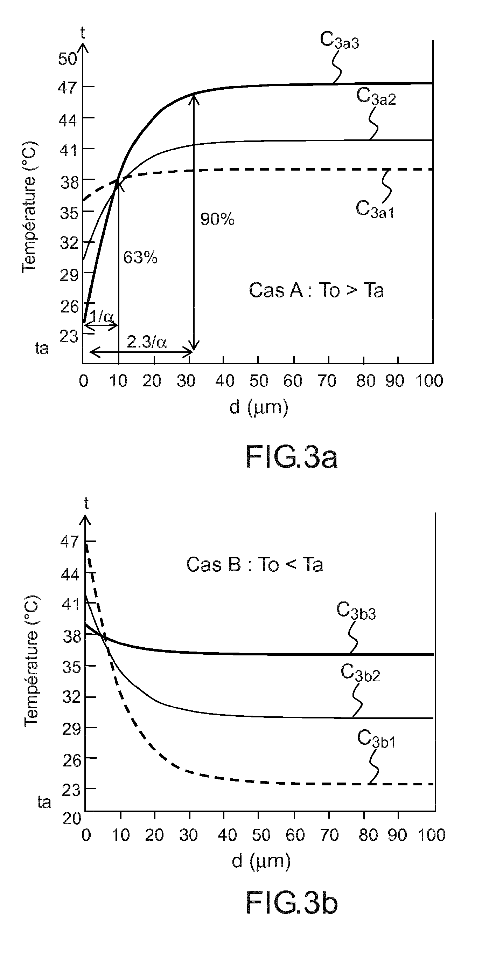

Les figures 3a et 3b illustrent, trois cas typiques de réponse t[d(x,y)] en comparaison avec les meilleurs ajustements mathématiques selon un modèle $t_{fit}$ (d), d'expression générale et ce dans le cadre du cas A et dans le cadre du cas B, ceci pour trois couples d'émissivités du substrat $\varepsilon_1$ et de la couche $\varepsilon_2$ : $\varepsilon_1 = 0.1$ et $\varepsilon_2 = 0.9$ ; $\varepsilon_1 = 0.3$ et $\varepsilon_2 = 0.7$ ; $\varepsilon1 = 0.5$ et $\varepsilon_2 = 0.6$ et pour une valeur constante du coefficient $\alpha fit$ de 0.1 $\mu m^{-1}$.

$$t_{fit} (d) = A. \, [1-\exp(-\alpha_{fit}.d)] + t_{min}$$

$$A = t_{max}-t_{min}$$

$t_{max}$ et $t_{min}$ sont deux paramètres expérimentaux directement liés aux températures To et Ta et que l'on peut exprimer à partir des expressions de Wmaxet $W_{min}$ précédemment définies.

$$t_{max} = 1/\sigma \, (W_{max})^{-4} - 273$$

$$t_{min} = 1/\sigma \, (W_{min})^{-4} - 273$$

Il est utile de remarquer que $t_{min}$ = Ta pour une émissivité du substrat $\varepsilon_2$=0 et $t_{max}$ = To pour une émissivité de la couche $\varepsilon_1$=1.

La plus grande sensibilité théorique est donc obtenue pour une couche d'émissivité 1 sur un substrat d'émissivité nulle.

Plus précisément, en mode émission, on obtient respectivement les courbes $C_{3a1}$, $C_{3a2}$, $C_{3a3}$ et en modes réflexion les courbes $C_{3b1}$, $C_{3b2}$, $C_{3b3}$ représentées sur les figures 3a et 3b.

La sensibilité de la mesure est d'autant plus grande que la différence entre les émissivités du substrat et de la couche est élevée. Les réponses des deux modes de fonctionnement, cas A (To>Ta) et cas B (To<Ta), sont symétriques et sont exploitables autant l'un que l'autre pour des mesures de cartographie d'épaisseur.

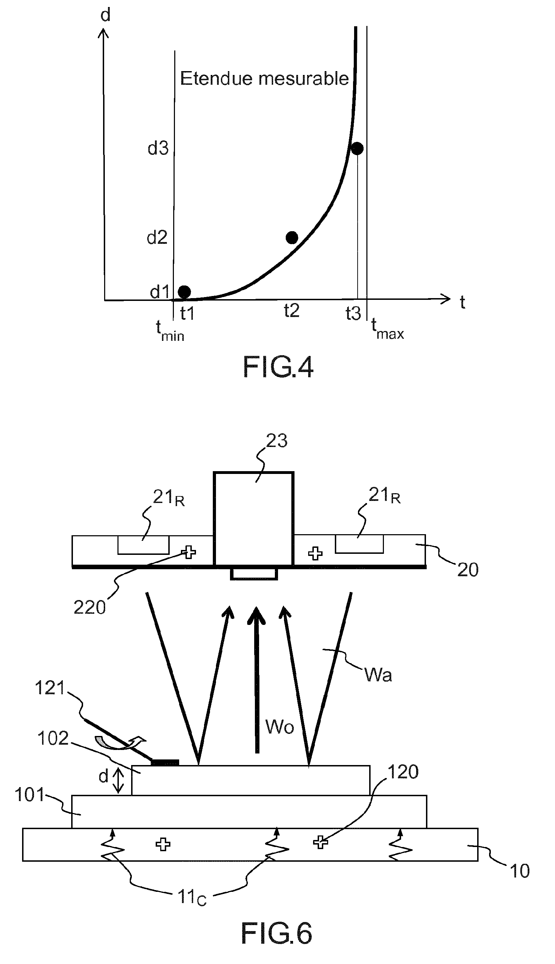

On peut alors utiliser une loi de transformation d(t), telle que celle représentée en figure 4 qui est une loi réciproque de la loi du modèle « tfit ». Appliquée à l'ensemble de la matrice des données t(x,y) issues de la caméra, elle permet de remonter à la matrice des épaisseurs d(x,y) qui est la finalité de la mesure.

$$d \, [t(x,y)] = (-1/\alpha_{fit}). \, Ln \, [1 - (t(x,y) - t_{min}) / (t_{max}-t_{min})]$$

Cette transformation est non linéaire. Pour les faibles épaisseurs, la pente est la plus faible donc la mesure de l'épaisseur d est la plus précise.

La pente croît pour les fortes épaisseurs pour devenir infinie, donc la sensibilité de la mesure tend à s'estomper. L'épaisseur à partir de laquelle la mesure sature dépend du coefficient $\alpha$ lié à l'absorption optique (dans la bande de détection dans l'infrarouge lointain) par unité d'épaisseur de la couche.

Comme illustré sur la figure 4, pour une épaisseur $d=1/\alpha_{fit}$, la réponse est à 63% de la saturation contre 90% pour une épaisseur $d= 2.3/\alpha fit$, ceci étant mis en évidence par les points $d_1$, $d_2$ et $d_3$ représentés.

Le triplet de paramètres $t_{min}$, $t_{max}$, et $\alpha_{fit}$ nécessaires à la transformation d(t) est caractéristique de chaque couple couche(s)/substrat et de conditions expérimentales déterminées, c'est-à-dire pour des températures To et Ta bien précises. Ainsi selon l'invention, l'opération de calibration a pour but d'extraire ces trois paramètres à partir, au minium, de trois mesures de trois épaisseurs distinctes d'un même couple couche(s)/substrat.

$t_{min}$ et $t_{max}$ sont exprimés en °C et sont plus spécifiquement reliées aux conditions opératoires des températures To et Ta tandis que le paramètre $\alpha$fit n'est dépendant que de la nature du couple couche(s)/substrat.

La calibration ayant été réalisée au préalable sur un couple couche/substrat déterminé, la transformation de la matrice des données extraites de la caméra en matrice spatiale d'épaisseurs est possible à condition de reproduire fidèlement les conditions de température To et Ta pour lesquelles les paramètres $t_{min}$ et $t_{max}$ ont été extraits de la procédure de calibration. Ce calibre est réalisé à partir du couple de matériaux couche(s)/ substrat de l'échantillon à mesurer. Trois valeurs connues d'épaisseurs sont nécessaires au minimum.

La procédure de calibration va être décrite ci-après de manière générale :

Ainsi, selon l'invention on procède à la définition d'une loi de transformation d(t), selon les principes suivants :

Pour tout couple couche(s)/substrat, et pour des conditions de températures To et Ta fixées, un triplet spécifique de paramètres ($t_{min}$, $t_{max}$, et $\alpha$fit) détermine la loi de transformation d(t) propre à chacun d'eux. La calibration a pour but d'extraire ces trois paramètres à partir d'une procédure préalable réalisée pour chaque couple couche(s)/substrat.

Cette procédure est décrite ci-après. Trois mesures sont effectuées sur trois échantillons de référence du même couple couche(s)/substrat qui sont constitués de trois épaisseurs différentes, $d_1$, $d_2$ et $d_3$, de ladite couche. Ces trois épaisseurs $d_1$, $d_2$ et $d_3$ ont été préalablement mesurées sur un système métrologique adapté à la nature des matériaux constituant le couple couche(s)/substrat considéré. Par exemple, s'il s'agit d'une couche optique transparente sur un substrat réflectif, il peut s'agir d'une mesure optique par ellipsométrie ou par sonde confocale. S'il s'agit de revêtements sur métaux, un système de mesure à principe de type magnétique ou par courants de Foucault peut convenir. Une mesure par ultrasons très haute fréquence est aussi une solution envisageable. La mesure d'une marche gravée localement dans la couche avec un profilomètre mécanique est une alternative, simple et de grande précision.

Ces échantillons peuvent être de dimensions réduites, de l'ordre du $cm^2$. La valeur d'épaisseur $d_1 = 0$ correspondant au substrat sans dépôt est une solution judicieuse pour le calibre 1 qui donne directement la valeur tmin. Les deux autres épaisseurs $d_2$ et $d_3$ sont judicieusement choisies pour couvrir au mieux la gamme de sensibilité maximale de la réponse d(t) entre la réponse minimale $t_{min}$ (épaisseur nulle) et la valeur $t_{max}$ correspondant à la saturation.

Avantageusement, il est judicieux de s'approcher des conditions suivantes pour la réalisation des calibres suivants :

- calibre 1 : $d_1$ =0 qui correspond au substrat nu sans dépôt (ce peut être avantageusement une zone de gravure de la couche des deux échantillons suivants) ;
- calibre 2 : $d_2$ = 1/$\alpha$fit qui correspond à 60 % de la saturation ;
- calibre 3 : $d_3$ = 2.3/$\alpha$fit qui correspond à 90% de la saturation Après cette phase expérimentale, une procédure mathématique de fit de la meilleure courbe, de loi générale d(t), autour des points $d_1(t_1)$, $d_2(t_2)$ et $d_3(t_3)$, est mise en oeuvre par une méthode de régression non linéaire.

La solution permet d'extraire les paramètres $t_{min}$, $t_{max}$ et $\alpha_{fit}$. Des variantes de cette procédure sont possibles. Par exemple la connaissance directe de la valeur $t_{min}$ par la mesure de la réponse d'un calibre $d_1$ d'épaisseur nulle permet une simplification de la procédure. Une simple calibration de réponse linéaire est aussi possible si l'application de la mesure concerne de faibles variations autour d'une épaisseur donnée. Dans ce cas la loi d(t) de type fonction affine est très aisément acquise. A contrario, si l'on souhaite une grande précision métrologique on peut rechercher une calibration non linéaire à plus grand nombre de points dans une zone d'épaisseur restreinte.

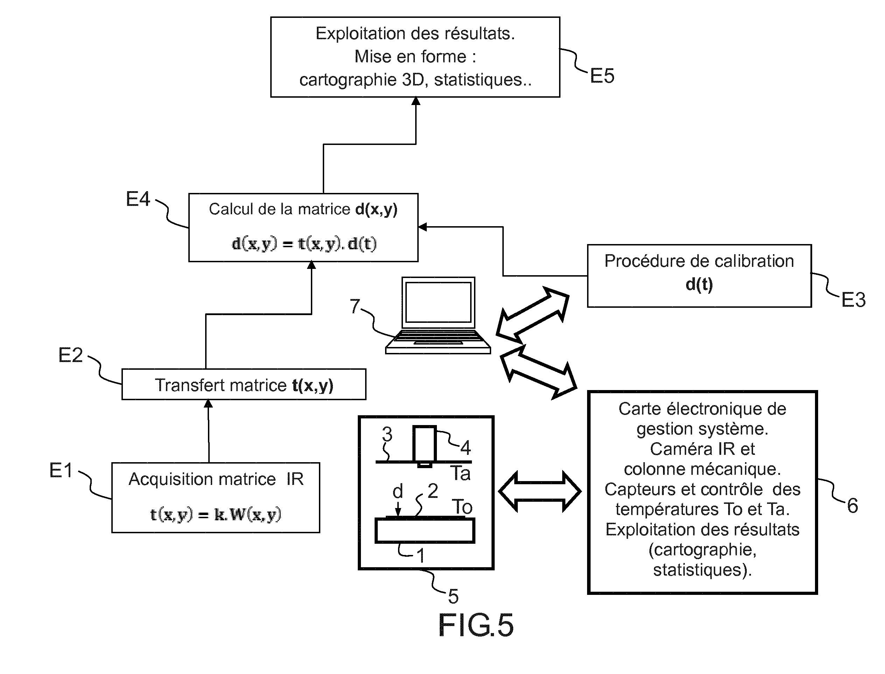

La figure 5 illustre le synoptique général du dispositif de la présente invention en fonctionnement, via des blocs relatifs à des étapes et des moyens utilisés :

- étape E1 : acquisition par une matrice de détection matricielle IR de données de rayonnements W(x,y) permettant de définir le paramètre matriciel t(x,y) ;
- étape E2 : transfert de la matrice t(x,y) depuis l'information W(x,y) ;
- étape E3 : procédure de calibration permettant de définir la fonction d(t) ;
- étape E4 : calcul de la matrice d(x,y) = t(x,y) d(t) ;
- étape E5 : exploitation des résultats d(x,y) pour mise en forme, réalisation de cartographie 3D, étude statistique, ...

L'ensemble de ces étapes est réalisé grâce aux moyens suivants :

- un premier support 1 portant un ensemble couche(s)/substrat 2 porté à une température contrôlée To et un second support 3 porté à une température contrôlée Ta couplé à des moyens de détection matricielle 4, lesdits supports pouvant être mis dans une enceinte 5 ;
- une carte électronique 6 de gestion système permettant de commander :

  o la position des moyens de détection type caméra IR ;
  o des capteurs de températures des deux supports :
  o d'exploiter les résultats ;

- des moyens type ordinateur 7 permettent de gérer l'ensemble du dispositif.

Dans le système de la présente invention, il est nécessaire de connaître précisément la température des deux supports. A cet effet, deux capteurs de température au minimum sont nécessaires pour s'assurer de la reproduction des températures To et Ta. Dans les deux cas, To ou Ta, il s'agit de connaître une température vraie de surface. Il existe des causes d'erreur de ces mesures notamment au niveau des contacts thermiques des capteurs, nécessitant une haute précision absolue (typiquement des capteurs de précisions 0,1 °C sont particulièrement bien adaptés). En raison des inhomogénéités spatiales de température, il peut être intéressant de distribuer différents capteurs au niveau de chacun des supports.

D'autres capteurs permettent d'évaluer et corriger les inhomogénéités de température $\Delta To$ de l'échantillon et $\Delta Ta$ de la plaque supérieure. Une procédure d'auto-correction de l'inhomogénéité spatiale du système lui-même est réalisable par référence à une mesure d'une couche de forte émissivité, à la surface d'un substrat identique.

Par ailleurs les capteurs servent aussi de test de déclenchement de l'acquisition des trames vidéo par la caméra à partir de certains seuils thermiques de To et Ta.

Selon le modèle de l'invention, la pente maximale de la réponse d(t) à l'origine est : $\delta d/\delta t = 1/(\alpha.\Delta t)$ avec $\Delta t = t_{max}-t_{min}$.

On peut faire l'approximation suivante :

$$t_{max}-t_{min} \sim (To-Ta). (\Delta\varepsilon)$$

$\Delta\varepsilon$ représente la différence d'émissivité entre le substrat et la couche à mesurer.

Pour $\alpha=0.1\ \mu m^{-1}$, qui représente une valeur typique, la pente à l'origine est de l'ordre de : $\delta d/\delta K \approx 10/\Delta t\ \mu m/K$ ou encore $\delta d/\delta K \approx 10/ [(to-ta).\Delta\varepsilon]\ \mu m/K$

Dans les meilleurs cas (différence d'émissivité supérieure à 0.8) :

$\delta d/\delta K \approx 10/(To-ta)\ \mu m/K$ fournissant une pente effective de 0.2 $\mu m/K$ pour une température de plaque chauffante de 70°C environ (To-Ta $\sim$ 50°C).

Au point proche du « point de saturation » : point $d_3$, de la figure 4, la pente diminue d'environ un facteur 10. La gamme de sensibilité raisonnablement exploitable varie donc de 0.1 $\mu m/K$ à 1 $\mu m/K$.

Concernant l'estimation de la résolution de la mesure de variation spatiale d'épaisseur : les meilleurs imageurs sont spécifiés pour une sensibilité de mesure de variation minimale de température limitée par leur propre bruit de valeur typique : $\delta K = 40mK$.

La mesure de variation de variation minimale d'épaisseur d'un pixel à l'autre est $\delta d$ avec $\delta d = \delta K. \delta d/\delta K$.

La meilleure résolution de variation spatiale d'épaisseur pour les couples couche /substrat à fort contraste d'émissivité, et pour de fines épaisseur (t/$\Delta t$) < 0.1 est donc :

$$\delta d = 0.04. 0.2\ \mu m/K\ soit\ \ \delta d \sim 0.01\ \mu m$$

Pour des épaisseurs élevées (t/$\Delta t \sim 0.9$) ou des couples couche/substrat à faible contraste d'émissivité (0.1) et fine épaisseur, $\Delta d$ est de l'ordre de 0.1 $\mu m$. Enfin pour des couches à faible contraste et forte épaisseur, la résolution remonte vers le micron.

Le tableau ci-dessous résume le bilan de résolution théorique de la variation d'épaisseur $\delta d$ ($\mu m$), selon des cas typiques de contraste des émissivités entre couche et substrat et d'épaisseur.

| Δε couche/substrat Epaisseur | Δε ~ 0.1 | Δε > 0.8 |
|---|---|---|
| d ~ 0.1/αfit  (t/Δt ~ 0.1) | 0.1 | 0.01 |
| d ~ 2.3/αfit  (t/Δt ~ 0.9) | 1 | 0.1 |

Les cas de contraste d'émissivités élevés sont ceux de revêtements de type isolant (oxydes, peinture, polymères) sur un métal tandis que le cas de contrastes faibles ou modérés ($\Delta\varepsilon < 0.5$) correspond à un nombre majoritaire de cas.

Selon une variante de l'invention , il peut être particulièrement intéressant de porter le premier support supportant l'ensemble couche(s) mince(s)/substrat successivement à plusieurs températures.

En effet, une telle approche permet de supprimer l'image parasite de réflexion de la caméra.

Ainsi, si pour un même échantillon, des mesures $t_1(d)$ et $t_2(d)$ sont réalisées successivement aux températures de surface $To_1$ et $To_2$ tout en conservant la même température Ta ($t_{min}$ constant), alors :

$$t_1 = (t_{1max} - t_{min}).\ [1 - exp(-\alpha fit.d)] + t_{min}$$

$$t_2 = (t_{2max} - t_{min}).\ [1 - exp(-\alpha fit.d)] + t_{min}$$

avec :

$$t_{1,2\ max} = 1/\sigma\ .\ W_{1,2\ max}^{-4}$$

$$W_{1,2\ max} = \sigma.t_{1,2\ max}^{4}$$

$$W_{1,2\ max} = \varepsilon 2.\sigma.t_{1,2}^{4} + \varepsilon a.\sigma.Ta^4.\ [1 - \varepsilon 2]$$

La différence $t_2 - t_1$ conduit à l'expression de l'épaisseur d suivante :

$$d = -1/\alpha\ Ln\ [1 - (t_2 - t_1)\ /\ (t_{2max} - t_{1max})]$$

Cette transformation ne nécessite pas la connaissance de la température Ta mais par contre oblige à connaître les deux valeurs $t_{1max}$ et $t_{2max}$

Il peut aussi être envisagé de procéder à une mesure multi températures pendant une montée suffisamment lente avec diverses acquisitions (durée très faible devant la montée en température) qui sont déclenchées automatiquement par une succession de consignes atteintes par les capteurs lors de cette montée en température.

Il n'est alors plus besoin de stabiliser l'échantillon à une température fixe, opération toujours source d'erreurs. On peut ainsi améliorer la précision de la mesure en tirant parti d'un effet de « moyennage » du post traitement d'équations multiples.

Selon une variante de l'invention, il peut être particulièrement avantageux, d'apporter l'énergie depuis le second support incorporant les moyens de détection matricielle, plutôt que de chauffer le premier support pour élever en température la couche mince à analyser.

De manière générale, la première solution (cas A) présentée précédemment consiste à apporter l'énergie de rayonnement par l'échantillon lui-même chauffé à une température supérieure à l'ambiante, notamment par rapport à la plaque supérieure servant de source froide, correspondant à un mode dit d'émission, par rapport à l'échantillon.

Selon la présente variante, l'énergie est apportée par la plaque supérieure, l'échantillon devenant la source froide. On peut donc alors parler de « mode de réflexion » bien que le principe reste exactement le même dans les deux cas, à partir de deux sources, l'une chaude, l'autre froide.

L'échantillon peut, soit rester à l'ambiante soit, plus avantageusement être refroidi par des éléments à effet Peltier à une température contrôlée To inférieure de la plaque supérieure qui est chauffée à la température Ta.

Cette configuration thermique, par refroidissement de l'échantillon et chauffage de la plaque supérieure, est très avantageuse. En comparaison au cas A (mode d'émission), il n'y pas lieu de chauffer l'échantillon par diffusion thermique sur une plaque chauffante ce qui est source d'erreurs, limite la température d'émission, et limite aussi le caractère non destructif de la mesure.

Le comportement thermique est aussi optimisé avec la source froide dans le bas et la source chaude en haut, ce qui favorise un équilibre de flux thermique montant laminaire.

La conception de la plaque supérieure est celle d'une source de rayonnement de corps noir de radiation maximale vers l'échantillon du bas.

Les performances de sensibilité de la mesure étant directement liées à l'écart ∆T entre source chaude et source froide, une augmentation importante de la température chaude sans risque pour l'échantillon est un avantage déterminant.

Les performances du système s'en trouvent donc améliorées, en résolution et dans l'aptitude à mesurer des couples couche / substrat à plus faible contraste d'émissivité, donc en élargissant les retombées applicatives.

Par ailleurs, l'énergie élevée, qui croît en $T^4$, améliore notablement les conditions du rapport signal à bruit détecté par des moyens de détection de type caméra et donc sa précision. La conception de la source doit prendre en compte le bilan de flux énergétique depuis la source, sa réflexion sur l'échantillon et sa détection sur la surface élémentaire d'un pixel du capteur. Un rapide bilan montre que pour une surface de source chaude de 1 cm$^2$, cent fois moindre que celle de la plaque chauffante du cas A, portée à une température de 1100K (3 fois supérieure au cas A), la radiance totale de la source est de l'ordre de dix fois supérieure au cas A . De telles sources de corps noirs miniaturisés existent commercialement, avec des options de réflecteurs paraboliques pour homogénéiser le faisceau.

Elles peuvent être commandées de façon très rapide, dans la milliseconde, donc sans inertie thermique dommageable pour l'échantillon. La commande de température d'émission est aussi un enrichissement système vers des extensions applicatives.

Comme les angles solides d'émission et de réception sur le capteur infra-rouge sont élevées (> 30°), il est possible de cartographier une surface quelconque par recoupement de plusieurs trames vidéo acquises sous différents angles d'un l'échantillon 3D. Des validations ont été réalisées avec succès sur la mesure de revêtements d'échantillons métalliques cylindriques. Il est possible de mesurer des échantillons non plans sans la difficulté de chauffer uniformément un échantillon en exploitant le mode de réflexion.

Il est possible de mesurer de grandes surfaces par la conception d'un système portable et manipulable, de type appareil photographique infra rouge avec flash de type corps noir placé de façon annulaire autour de la surface à mesurer.

Le contrôle en ligne de production de pièces défilant sur un tapis sous la partie haute du système (caméra et plaque de corps noir) est également rendu possible avec un système de l'invention fonctionnant en mode réflexion, en séparant le bloc de caméra et d'éclairement par la plaque supérieure chauffante.

En effet, compte tenu de la rapidité de la mesure (une trame vidéo ne prend que quelques dizaines de millisecondes), l'échantillon peut être fort bien mesuré sur un tapis défilant en dessous de la plaque d'éclairement infrarouge portée à une température suffisante élevée vis-à-vis des erreurs d'estimation de la température Ta de l'ensemble couche(s) mince(s)/substrat. Par exemple une erreur de 1 % est commise pour une estimation de Ta de 2°C autour de 20°C avec un éclairement à une température de la plaque To tout à fait réaliste de 200°C.

<u>Première variante de dispositif selon l'invention fonctionnant en émission :</u>

Le dispositif est illustré en figure 6. Il comporte un premier support 10 supportant l'ensemble couche(s) mince(s)/substrat à analyser et un second support 20 couplé à des moyens de détection matricielle 23. Plus précisément, le premier support 10 supporte l'ensemble couche(s) mince(s)/substrat comprenant une couche fine à analyser en épaisseur 102 supporté par un substrat 101. Le support 10 est équipé de moyens de chauffage de précision 11$_C$ (pouvant comporter une plaque chauffante) et des capteurs de température 120. La température est régulée par une boucle d'asservissement des informations de divers capteurs sur la valeur de consigne To. Un capteur spécifique de contact sur la surface de l'échantillon est mis en oeuvre par une commande de déplacement d'un bras miniaturisé.

Ce premier dispositif exploite ainsi le mode de fonctionnement mode émission, correspondant au cas d'une température d'échantillon portée à une valeur supérieure de quelques dizaines de degrés à celle de la température de la plaque supérieure servant au confinement. La figure 6 schématise, le rayonnement émis Wo et le rayonnement Wa émis depuis le second support et réfléchi au niveau du premier support.

Il peut être prévu des moyens non représentés, permettant de régler la distance entre la couche mince à analyser et le détecteur matriciel infrarouge 23, et la distance entre les deux supports peut être rendue ajustable par motorisation asservie sur un capteur de distance verticale entre l'échantillon et les moyens de détection matricielle pouvant être typiquement une caméra.

Le second support peut être une plaque métallique 20 revêtue d'un matériau à émissivité proche de l'unité (non représenté) servant de confinement énergétique d'émission réception.

Cette plaque, entourant la caméra, est refroidie au moyen d'éléments Peltier $21_R$ et comporte des capteurs de température 220.

La lecture des capteurs, les commandes de régulation des températures Ta et To, et les commandes mécaniques, sont interfacées via des communications numériques RF et USB centralisées sur un ordinateur central, de type portable, non représenté. Il en est de même pour la commande d'extraction des trames vidéo de la caméra IR. Ces commandes sont centralisées dans un bloc logiciel spécifiquement développé.

La procédure de calibration précédemment décrite est intégrée dans une routine logicielle spécifique.

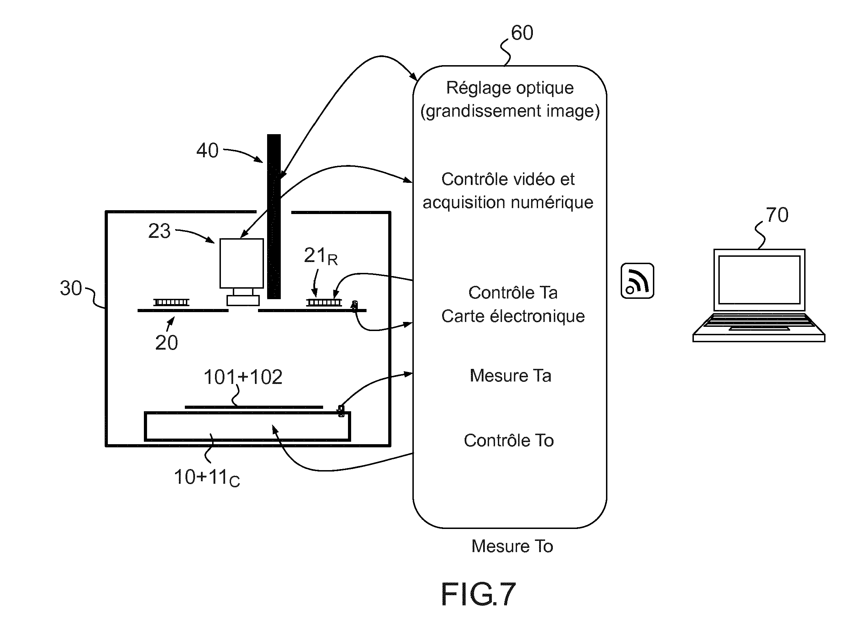

La figure 7 illustre une variante de dispositif fonctionnant en mode émission, dans laquelle les deux supports sont placés dans une enceinte 30. Le premier support 10 intègre des moyens de chauffage lac et peut typiquement être une plaque chauffante.

Le second support 20 entoure une caméra IR 23, un rail de guidage 40 permettant de régler la distance entre les deux supports. Le second support comporte en outre des moyens de refroidissement à effet Peltier $21_R$.

Cette plaque, entourant la caméra, est refroidie au moyen d'éléments Peltier $21_R$ à une température inférieure à celle de l'enceinte par asservissement sur la consigne Ta.

L'ensemble est couplé à une carte électronique 60 qui assure les fonctions suivantes :

- le réglage optique (soit l'agrandissement image) via la commande du rail de guidage ;
- le contrôle des températures To et Ta ;
- le contrôle vidéo et l'acquisition numérique.

La carte numérique est couplée à un ordinateur de pilotage 70.

Cette carte numérique peut avantageusement être une unité compacte d'ordinateur embarquée dans l'enceinte, cette unité étant elle même en communication avec l'ordinateur extérieur.

Seconde variante de dispositif selon l'invention fonctionnant en mode réflexion :

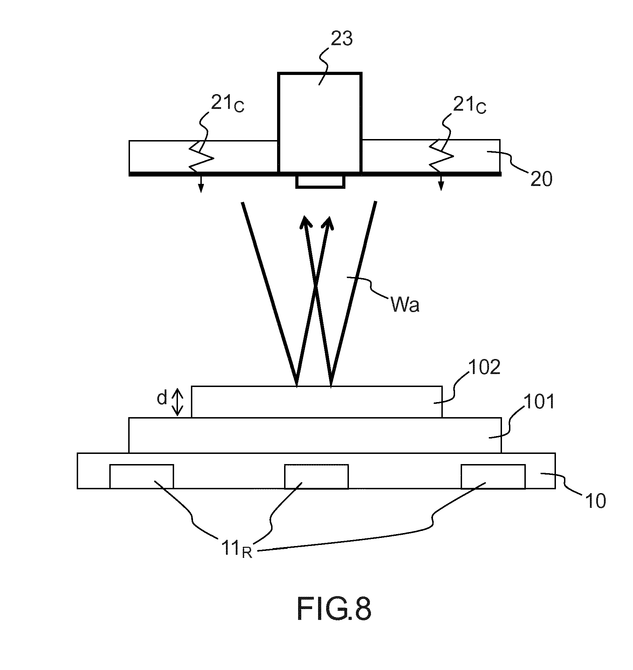

Le dispositif est illustré en figure 8 et fonctionne en mode dit réflexion. La température la plus élevée est la température du second support 20, équipé d'éléments chauffants $21_C$ (il peut typiquement s'agir d'une plaque chauffante).

Le premier support 10 supportant l'ensemble couche(s) mince(s)/substrat comportant la couche mince à analyser 102, peut avantageusement être équipé d'éléments « Peltier » refroidissant $11_R$.

Le principe reste le même mais symétrique du mode d'émission avec une température de plaque supérieure à celle refroidie de l'échantillon.

L'architecture générale reste la même que celle du système illustré en figure 6, mais intervertissant les éléments chauffants sur la plaque supérieure et les éléments refroidissants sur la partie basse supportant l'échantillon.

Le rôle de la plaque supérieure est d'illuminer l'échantillon en infrarouge thermique basse température dans la bande thermique 8 - 12 $\mu$ m et non pas de transmettre un flux de puissance thermique par diffusion dans l'échantillon comme c'est le cas dans le dispositif du premier exemple précédemment décrit.

Cette considération relâche la puissance de commande utile juste pour compenser le flux de convection et radiatif. Une plaque peu épaisse avec peu d'inertie est suffisante. Il est possible de monter la température d'émission de cette plaque à une valeur bien supérieure à celle du cas en mode émission, laquelle est limitée par l'intégrité de l'échantillon à quelques dizaines de degrés au-dessus de l'ambiante. Ce système apporte un gain de performance lié à l'augmentation de l'écart $\Delta t$ entre source chaude et froide (température de l'échantillon refroidie quelques degrés en dessous de l'ambiante), une l'intégrité totale de l'échantillon renforçant ainsi le caractère non destructif de la mesure et l'adaptabilité à des mesures d'ensemble couche(s) mince(s)/substrats non plans.

Troisième variante de dispositif fonctionnant en mode réflexion à haute température :

Le dispositif comprend au niveau du second support, des moyens chauffant autres qu'une plaque chauffante d'illumination en infra-rouge lointain basse température, il peut avantageusement s'agir d'une source spécifique de rayonnement haute température de type corps noir miniaturisé. De tels composants élémentaires existent sur le marché à base de microtechniques MEMS. Avec une très faible inertie thermique, ils peuvent être commandés très rapidement à des températures d'émission ajustables ou modulables temporellement. Les températures d'émission vont de 1000K à plusieurs milliers Kelvin, permettant d'assurer une émittance très élevée, bien supérieure malgré de petites surfaces, de l'ordre du $cm^2$.

De manière générale, dans le cadre de la présente invention, les spectres d'émission peuvent être décalés dans l'infra-rouge médian (bande 2 à 8 $\mu$m). Ceci élargit les possibilités de mesures à des matériaux différents de ceux permis avec l'émission dans la bande 8-12 $\mu$m en raison de la dispersion des propriétés concernées par la mesure : émissivité, atténuation linéaire, propriétés optiques.

La possibilité de varier aisément et rapidement la température d'émission apporte une importance considérable en enrichissant les possibilités d'une analyse multi-spectrale.

Une structure d'illumination en lampe annulaire autour de la caméra composée de plusieurs de ces composants élémentaires constitue une solution pour un éclairement le plus homogène possible.

Compte tenu de la très haute température de rayonnement, il n'est pas nécessaire de refroidir l'échantillon car la répercussion sur le facteur $\Delta$t de calibration est négligeable.

Quatrième variante de dispositif permettant une opération de calibration de la valeur absolue de l'épaisseur

L'architecture de cette variante est similaire à celles des figures précédentes avec ajout d'un filtre entre les deux supports

Dans ce cas, le système de cartographie d'épaisseur de couche mince, objet de l'invention, est basé sur l'imagerie dans l'infra-rouge lointain dans une large bande optique, typiquement dans la bande 8-12 $\mu$m accessible par les imageurs conventionnels. Le système est très approprié pour des mesures de variations spatiales d'épaisseurs. L'accès à la valeur absolue d'épaisseur passe par une stratégie de calibration basée sur des calibres ou mires de référence. Cette variante permet l'accès à une mesure métrologique de la valeur absolue basée sur une analyse multi chromatique.

La réponse en épaisseur filtrée sur une bande spectrale étroite est de type résonnant avec des pics d'intensité directement reliés à l'épaisseur absolue de la couche au point mesuré. Cette mesure nécessite un filtre polychromatique ou plusieurs filtres dans la bande infra-rouge lointain. Ces composants existent. Le bilan de signal à bruit n'est pas aussi élevé que pour la mesure large bande et nécessite des compléments système (imageur spécifique) et des traitements de signal d'appoint (intégration). Une analyse à multi longueurs d'onde avec des réponses résonantes permet de remonter aisément à l'épaisseur absolue.

Plus précisément, la réponse à bande spectrale étroite du bilan de rayonnement W(xo,yo) d'une zone particulière de l'ensemble couche(s) mince(s)/substrat est de type résonant. La réponse à plusieurs longueurs d'ondes de cette même zone permet de reconstituer une analyse spectrale de W(xo,yo). Le traitement par transformée inverse de Fourrier de cette analyse spectrale permet de remonter à la valeur d'épaisseur absolue dans la zone choisie. Cette procédure peut donc permettre un étalonnage des épaisseurs absolues de différentes zones ponctuelles d'épaisseur d(xo,yo). Après retour en mode de fonctionnement standard large bande (sans filtre), ces mesures peuvent servir comme les références nécessaires pour déterminer la fonction mathématique d[t(x,y)] de transformation de la réponse t(x,y) du détecteur en fonction de distribution spatiale de l'épaisseur d(x,y). Cette option peut ainsi permettre de s'affranchir du besoin de calibres de référence d'épaisseurs spécifiques pour chaque nature de couche/substrat mesuré.

Une architecture judicieuse consiste à employer un filtre accordable du type AOTF (Acousto Optic Tunable Filter) qui permet un filtrage continu de l'image de l'échantillon par une commande de balayage électronique. L'exploitation d'une telle analyse ,outre l'extraction de l'épaisseur est riche d'informations physiques sur la couche telles que sa densité, son hygrométrie, sa stoechiométrie s'il s'agit de composés chimiques complexes, l'inclusion d'impuretés.. Il est aussi envisageable de pouvoir mesures des couches multiples.

## Revendications

**1.** Dispositif de mesure d'un ensemble de données spatiales d'épaisseur d(x,y) d'une couche mince comprise dans un ensemble de couche(s) mince(s)/substrat **caractérisé en ce qu'**il comporte :

   - un premier support supportant ledit ensemble de couche(s) mince(s)/substrat et étant couplé à des premiers moyens de mesure d'une première température correspondant à la température To dudit ensemble ;
   - un second support entourant des moyens de détection matricielle infra-rouge et étant couplé à des seconds moyens de mesure d'une seconde température correspondant à la température Ta dudit second support ;
   - l'un des premier ou second supports comprenant des moyens de chauffage d'un des deux supports, de manière à générer au niveau de ladite couche mince, un ensemble de rayonnements infra-rouge émis ou réfléchi d'énergie W(x,y), ledit ensemble de rayonnements étant :

      o confiné dans un volume défini entre les deuxdits supports ;

o détecté par lesdits moyens de détection et relatif à un couple de données spatiales, lesdits moyens fournissant des paramètres liés auxdites épaisseurs ;

o dépendant de la puissance rayonnée (Lo) au niveau dudit premier support et de la puissance rayonnée (La) au niveau dudit second support ;

- des moyens pour réguler la différence de température entre lesdits premier et second supports ;
- des moyens de traitement pour extraire les données spatiales d (x,y) d'épaisseur d(x,y), depuis lesdits paramètres.

2. Dispositif de mesure d'un ensemble de données spatiales d'épaisseur d(x,y) d'une couche mince comprise dans un ensemble de couche(s) mince(s)/substrat selon la revendication 1, **caractérisé en ce que** lesdits moyens de traitement comprennent de moyens pour construire une fonction mathématique reliant une épaisseur d (x,y) de la dite couche à une température équivalente t(x,y) obtenue en sortie des moyens de détection.

3. Dispositif de mesure d'un ensemble de données spatiales d'épaisseur d(x,y) d'une couche mince comprise dans un ensemble de couche(s) mince(s)/substrat selon la revendication 1, **caractérisé en ce qu'**il comprend un filtre polychromatique ou un ensemble de plusieurs filtres monochromatiques placé (s) entre le premier support et le second support et des moyens de traitement de transformation de Fourrier inverse adaptés.

4. Dispositif de mesure d'un ensemble de données spatiales d'épaisseur d(x,y) d'une couche mince comprise dans un ensemble de couche(s) mince(s)/substrat selon l'une des revendications 1 à 3, **caractérisé en ce que** le support ne comportant pas de moyens de chauffage, comprend des moyens de refroidissement.

5. Dispositif de mesure d'un ensemble de données spatiales d'épaisseur d(x,y) d'une couche mince comprise dans un ensemble de couche(s) mince(s)/substrat selon l'une des revendications 1 à 4, **caractérisé en ce que** ledit dispositif fonctionne en mode émission, la température (To) dudit ensemble étant supérieure à la température (Ta) dudit second support.

6. Dispositif de mesure d'un ensemble de données spatiales d'épaisseur d(x,y) d'une couche mince comprise dans un ensemble de couche(s) mince(s)/substrat selon l'une des revendications 1 à 4, **caractérisé en ce que** ledit dispositif fonctionne en mode réflexion, la température (To) dudit ensemble étant inférieure à la température (Ta) dudit second support.

7. Dispositif de mesure d'un ensemble de données spatiales d'épaisseur d(x,y) d'une couche mince comprise dans un ensemble de couche(s) mince(s)/substrat selon l'une des revendications 1 à 6, **caractérisé en ce qu'**il comporte une enceinte dans laquelle sont positionnés lesdits premier et second supports.

8. Dispositif de mesure d'un ensemble de données spatiales d'épaisseur d(x,y) d'une couche mince comprise dans un ensemble de couche(s) mince(s)/substrat selon l'une des revendications 1 à 7, **caractérisé en ce que** le second support est une plaque métallique présentant une ouverture centrale dédiée aux moyens de détection.

9. Dispositif de mesure d'un ensemble de données spatiales d'épaisseur d(x,y) d'une couche mince comprise dans un ensemble de couche(s) mince(s)/substrat selon la revendication 8, **caractérisé en ce que** ladite plaque est recouverte d'un film de matériau d'émissivité proche de 1.

10. Dispositif de mesure d'un ensemble de données spatiales d'épaisseur d(x,y) d'une couche mince comprise dans un ensemble de couche(s) mince(s)/substrat selon l'une des revendications 1 à 9, **caractérisé en ce qu'**il comporte des premiers moyens d'asservissement de ladite première température et des seconds moyens d'asservissement de ladite second température respectivement sur une première température de consigne $(To_c)$ et sur une seconde température de consigne $(Ta_c)$.

11. Dispositif de mesure d'un ensemble de données spatiales d'épaisseur d(x,y) d'une couche mince comprise dans un ensemble de couche(s) mince(s)/substrat selon l'une des revendications 1 à 10, **caractérisé en ce que** les moyens de chauffage de l'un ou de l'autre desdits supports comprennent des moyens pour chauffer par effet Joule ledit support.

12. Dispositif de mesure d'un ensemble de données spatiales d'épaisseur d(x,y) d'une couche mince comprise dans un ensemble de couche(s) mince(s)/substrat selon l'une des revendications 5 à 10, **caractérisé en ce que** le second support comporte une source de rayonnement haute température de type corps noir

13. Dispositif de mesure d'un ensemble de données spatiales d'épaisseur d(x,y) d'une couche mince comprise dans un ensemble de couche(s) mince(s)/substrat selon l'une des revendications 1 à 10, **caractérisé en ce que** les moyens de refroidissement de l'un ou de l'autre desdits supports comprennent des cellules à effet Peltier.

14. Dispositif de mesure d'un ensemble de données spatiales d'épaisseur d(x,y) d'une couche mince comprise dans un ensemble de couche(s) mince(s)/substrat selon l'une des revendications 1 à 13, **caractérisé en ce qu'**il comporte en outre des moyens pour régler la distance entre les deuxdits supports.

15. Dispositif de mesure d'un ensemble de données spatiales d'épaisseur d(x,y) d'une couche mince comprise dans un ensemble de couche(s) mince(s)/substrat selon la revendication 14, **caractérisé en ce que** le second support équipé des moyens de détection matricielle est solidaire d'un rail de guidage, pour régler la distance entre les deuxdits supports.

16. Dispositif de mesure d'un ensemble de données spatiales d'épaisseur d(x,y) d'une couche mince comprise dans un ensemble de couche(s) mince(s)/substrat selon l'une des revendications 1 à 15, **caractérisé en ce que** les moyens de détection comprennent un capteur CCD ou CMOS, sensibles dans le domaine infra-rouge.

17. Dispositif de mesure d'un ensemble de données spatiales d'épaisseur d(x,y) d'une couche mince comprise dans un ensemble de couche(s) mince(s)/substrat selon l'une des revendications 1 à 16, **caractérisé en ce qu'**il comporte en outre un bloc logiciel de commande permettant de commander la régulation des températures, la lecture des moyens de détection, la focalisation des moyens optiques.

18. Procédé de mesure d'un ensemble de données spatiales d'épaisseur d(x,y) d'une couche mince comprise dans un ensemble de couche(s) mince(s)/substrat comprenant les étapes suivantes :

- le positionnement sur un premier support dudit ensemble de couche(s) mince(s)/substrat, couplé à des premiers moyens de mesure de la première température To dudit ensemble ;
- le positionnement au niveau d'un second support, de moyens de détection matricielle infra-rouge, couplé à des seconds moyens de mesure de la seconde température (Ta) dudit second support ;
- le chauffage de l'un des deuxdits supports de manière à générer au niveau de ladite couche mince, un ensemble de rayonnements infra-rouge rayonnés d'énergie W(x,y) ;
- la mesure pour au moins trois épaisseurs connues du couple de (matériau(x) couche(s) mince(s) ; substrat) correspondant à trois calibres, de l'énergie rayonnée (d, W) ;
- la détermination d'une courbe théorique :

$d\,[t(x,y)] = (-1/\alpha\text{fit}).\,\text{Ln}\,[1 - (t(x,y) - t_{min}) / (t_{max} - t_{min})]$ à partir d'une modèle mathématique et desdits trois mesures des trois calibres avec

o $t(x,y)$ : un paramètre de température équivalente reliée à l'énergie W(x,y) ;
o $t_{min}$ et $t_{max}$ : des températures reliées à ladite première température To et à ladite seconde température Ta ;

les paramètres $\alpha$fit, $t_{min}$ et $t_{max}$ constituant un triplet de paramètres spécifiques à la nature des matériaux de l'ensemble et selon le couple de températures To et Ta fixées.

- les mesures d'un ensemble de températures $t_m(x,y)$ au niveau de ladite couche mince ;
- le report desdites mesures $t_m(x,y)$ et données dm dans ladite équation de manière à définir ledit ensemble de données spatiales d'épaisseur d(x,y).

19. Procédé de mesure d'un ensemble de données spatiales d'épaisseur d(x,y) d'une couche mince comprise dans un ensemble de couche(s) mince(s)/substrat selon la revendication 18, **caractérisé en ce que** le modèle mathématique est de type régression linéaire.

20. Procédé de mesure d'un ensemble de données spatiales d'épaisseur d(x,y) d'une couche mince comprise dans un ensemble de couche(s) mince(s)/substrat selon l'une des revendications 18 ou 19, **caractérisé en ce qu'**il comporte au moins deux opérations successives de portée en températures à deux températures différentes dudit premier substrat.

21. Procédé de mesure d'un ensemble de données spatiales d'épaisseur d(x,y) d'une couche mince comprise dans un ensemble de couche(s) mince(s)/substrat selon l'une des revendications 17 à 19, **caractérisé en ce que** les moyens de détection matricielle comportant une caméra, le procédé comprend une étape de déclenchement de l'acquisition de trames vidéo asservie sur la détection de températures seuil au niveau des capteurs de températures des premiers et seconds supports.

**FIG.1**

d = 0, ε→ε1          d$_{sat}$, ε→ε2      Epaisseur couche
si ε1=0,             si ε2=1,
W= εa. L(Ta)         W= ε2.L(To)

**FIG.2**

FIG.3a

FIG.3b

**FIG.4**

**FIG.6**

FIG.5

FIG.7

EP 2 957 857 A2

FIG.8

**EP 2 957 857 A2**

**RÉFÉRENCES CITÉES DANS LA DESCRIPTION**

**Documents brevets cités dans la description**

- WO 1257234 A